# EUROPÄISCHE PATENTANMELDUNG

(11) **EP 1 441 315 A1**
(43) Veröffentlichungstag der Anmeldung: **28.07.2004**
(21) Anmeldenummer: 03028071.3
(22) Anmeldetag: 09.12.2003
(51) Int. Cl.: G07G 1/00, G07G 1/14, G07G 5/00, G07F 17/00

(54) **Lotterieterminal**

(30) Priorität: 27.01.2003 DE 10303166
(71) Anmelder: Wincor Nixdorf International GmbH, 33106 Paderborn (DE)
(72) Erfinder: Sauter, Markus, 78479 Reichenau (DE)

(57) **Zusammenfassung**

Der Erfindung liegt die Aufgabe zugrunde, ein Lotterieterminal zu entwickeln, mit dem auch Kassenfunktionen ausgeführt werden können. Durch die Erweiterung des Lotterieterminal um eine Eingabeeinrichtung und der Ausstattung der Datenverarbeitungseinrichtung mit einer Kassenanwendungssoftware kann der Kunde den Betrag für das Spiel zusammen mit dem Kaufpreis für sonstige Produkte wie ein Päckchen Zigaretten und eine Zeitschrift entrichten, wobei die Bedienperson den Betrag für das Spiel nicht nochmals separat erfassen muß.

## Beschreibung

Die Erfindung betrifft ein Lotterieterminal zur Verarbeitung von Spielscheinen.

Es ist allgemein bekannt, daß bei Lotteriespielen wie Lotto Spielscheine ausgefüllt werden. Beim Lottospiel werden 6 Zahlen vorausgesagt und auf einem Spielschein angekreuzt, die aus 49 Zahlen ausgelost werden. Dieser Spielschein wird mit dem Scanner eines Lotterieterminals eingescannt und dem Kunden wird eine mit einem Drucker erstellte Quittung übergeben, auf der die vorausgesagten Zahlen und der zu zahlende Betrag vermerkt sind. Der Kunde zahlt diesen Betrag entweder direkt am Lottoterminal, falls das Terminal mit einer Kassenlade ausgestattet ist oder er zahlt den Betrag an einer separaten Kasse, wobei die Bedienperson den Betrag manuell in die Kasse eingeben muß. In heutigen Lotterieverkaufsstellen werden jedoch nicht nur Lotteriespiele verkauft, sondern vor allem auch Tabakwaren und Zeitschriften, die über das separate Kassensystem abgerechnet werden. Dies bedeutet, daß in den ohnehin oft sehr kleinen Verkaufsräumen zwei Systeme untergebracht werden müssen.

Der Erfindung liegt die Aufgabe zugrunde, ein Lotterieterminal zu entwickeln, mit dem auch Kassenfunktionen ausgeführt werden können.

Diese Aufgabe wird mit einem Lotterieterminal der eingangs genannten Art gelöst, wobei das Lottoterminal um eine Eingabeeinrichtung erweitert und mit einer Kassenanwendungssoftware ausgestattet wird. Der Lotterieschein wird einge-scannt und der Kunde kann den Betrag für das Spiel zusammen mit dem Kaufpreis für sonstige Produkte wie ein Päckchen Zigaretten und eine Zeitschrift entrichten, wobei die Bedienperson den Betrag für das Spiel nicht nochmals separat erfassen muß.

Weitere Vorteile und Einzelheiten der erfindungsgemäßen Lösung ergeben sich aus der nachfolgenden Beschreibung, welche in Verbindung mit der beigefügten Zeichnung die Erfindung anhand eines Ausführungsbeispiels erläutert. Darin zeigt:

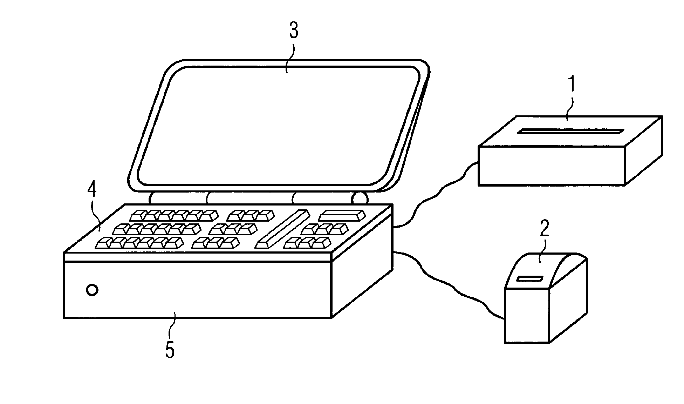

- Figur 1: eine schematische Darstellung eines Lotterieterminals gemäß der Erfindung.

Das in der Figur 1 schematisch dargestellte Lotterieterminal besteht aus einem Scanner 1 zum Einscannen der Spielscheine, einem Drucker 2 zum Ausdrucken der Quittung für den Kunden, einem Bildschirm 3 zum Anzeigen des eingescannten Lotteriescheins, des zu zahlenden Betrages oder Hinweisen auf Fehlerhaftigkeiten beim Ausfüllen des Lottoscheins sowie üblichen Kassenanwendungen. Des weiteren ist eine Tastatur 4 vorgesehen für manuelle Eingaben wie Preise und dergleichen und eine Kassenlade 5 zur Aufbewahrung des Geldes. Außerdem ist das Lotterieterminal mit einer Datenverarbeitungseinrichtung ausgestattet. Vorteilhafterweise weist das Lottoterminal zusätzlich noch einen Barcodeleser und ein Kartenlesegerät für bargeldlose Transaktionen auf. Weiterhin ist das Lotterieterminal mit der Lotteriegesellschaft per Datenleitung verbunden, so daß alle getätigten Transaktionen online übermittelt werden können. Die Datenverarbeitungseinrichtung des Lotterieterminals ist mit einer Software für Lotterieanwendungen und für Kassenanwendungen wie die Durchführung von Bezahlvorgängen für Produkte wie z.B. Zigaretten und Zeitschriften ausgestattet, so daß beide Anwendungen mit einem einzigen Terminal ausgeführt werden können. Durch die Kombination beider Anwendungen kann auf ein zusätzliches Kassensystem in den Lotterieannahmestellen verzichtet werden, so daß sich eine einfachere Handhabung ergibt und ein geringerer Platzbedarf erforderlich ist. Insbesondere gegenüber Lottoterminals, an denen nur der Spielbeitrag abgerechnet wurde, besteht für den Kunden der Vorteil, daß beim Kauf von zusätzlichen Artikeln in dem Laden nur ein einziger Bezahlvorgang erforderlich ist. Durch die Integration einer zusätzlichen Eingabeeinrichtung vorzugsweise in Form einer Tastatur können beliebige Kassenfunktionalitäten wie die Eingabe von Preisen durchgeführt werden. Es liegt jedoch auch im Rahmen der Erfindung, die Eingabeeinrichtung als Touchscreen auszubilden.

## Patentansprüche

1. Lotterieterminal für die Verarbeitung von Lotteriespielscheinen und die Abwicklung eines Bezahlvorgangs, ausgestattet mit einem Scanner, einem Drucker, einem Bildschirm zur Anzeige des eingescannten Spielscheins, einer Datenverarbeitungseinrichtung und einer Kassenlade zur Abwicklung des Bezahlvorgangs, **dadurch gekennzeichnet, daß** eine Eingabeeinrichtung zur manuellen Eingabe von Daten vorgesehen ist und daß die Datenverarbeitungseinrichtung mit einer Software betrieben wird, mit der die eingescannten Lotteriescheine verarbeitet werden und Kassenanwendungen für beliebige Produkte durchführbar sind.

2. Lotterieterminal nach Anspruch 1, **dadurch gekennzeichnet, daß** ein Barcodeleser vorgesehen ist.

3. Lotterieterminal nach Anspruch 1 oder 2, **dadurch gekennzeichnet, daß** ein Kartenlesegerät für Magnetstreifen- und/oder Chipkarten vorgesehen ist.

4. Lotterieterminal nach einem oder mehreren der Ansprüche 1 bis 3, **dadurch gekennzeichnet, daß** die Eingabeeinrichtung als Tastatur (4) ausgebildet ist.

5. Lotterieterminal nach einem oder mehreren der Ansprüche 1 bis 3, **dadurch gekennzeichnet, daß** die Eingabeeinrichtung als Touchscreen ausgebildet ist.
